# EUROPÄISCHE PATENTSCHRIFT

(11) **EP 1 583 951 B1**
(45) Veröffentlichungstag und Bekanntmachung des Hinweises auf die Patenterteilung: **21.05.2008**
(21) Anmeldenummer: 03785952.7
(22) Anmeldetag: 29.12.2003
(51) Int. Cl.: G01N 1/06, G01N 1/04

(54) **MIKROTOM**
MICROTOME
MICROTOME

(30) Priorität: 04.01.2003 DE 10300091
(43) Veröffentlichungstag der Anmeldung: 12.10.2005
(73) Patentinhaber: Rowiak GmbH, 30419 Hannover (DE)
(72) Erfinder: KERMANI, Omid, 50858 Köln (DE)
(74) Vertreter: Eisenführ, Speiser & Partner
(86) Internationale Anmeldenummer: PCT/EP2003/014951
(87) Internationale Veröffentlichungsnummer: WO 2004/061425

(56) Entgegenhaltungen:
- WO-A-01/78937
- WO-A-02/057746
- DE-A- 10 020 559
- US-A1- 2002 164 678
- LUBATSCHOWSKI H ET AL: "APPLICATION OF ULTRASHORT LASER PULSES FOR INTRASTROMAL REFRACTIVE SURGERY" GRAEFE'S ARCHIVE FOR CLINICAL AND EXPERIMENTAL OPHTHALMOLOGY, SPRINGER VERLAG, XX, Bd. 238, Januar 2000 (2000-01), Seiten 33-39, XP001014554 ISSN: 0721-832X

## Beschreibung

Die Erfindung betrifft ein Mikrotom mit einer Aufnahmevorrichtung mit einem Träger zum Aufnehmen von zumindest einem Abschnitt eines Bearbeitungsobjektes, und einer Trenneinrichtung. Ein weiterer Aspekt der Erfindung betrifft ein Verfahren zum Mikrotomieren von Bearbeitungsobjekten.

Mikrotome der vorgenannten Art und entsprechende Verfahren zum Mikrotomieren dienen dazu, von einem zu untersuchenden Bearbeitungsobjekt dünne Scheibchen abzutrennen, um diese beispielsweise mittels eines mikroskopischen Verfahrens zu untersuchen. Mikrotome werden häufig verwendet, um von einer Gewebeprobe dünne Gewebeschnitte zu gewinnen, die mittels eines Durchlichtmikroskopes untersucht werden können.

Im Stand der Technik sind Mikrotome bekannt, die eine Einspannvorrichtung für das Bearbeitungsobjekt und ein relativ zu dieser Einspannvorrichtung bewegbares Messer beinhalten. Das Messer ist leicht verfahrbar auf einem Schlitten befestigt und die Schneidkante des Messers kann in einer Trennebene hin- und hergefahren werden. Das Bearbeitungsobjekt kann in der Einspannvorrichtung eingespannt werden und mitsamt dem Träger der Einspannvorrichtung senkrecht zu der Trennebene verschoben werden.

Ein Mikrotomiervorgang mit dem bekannten Mikrotom wird in der Weise ausgeführt, dass das Bearbeitungsobjekt durch die senkrecht zur Trennebene gerichtete Verschiebebewegung in eine solche Position relativ zur Trennebene gebracht wird, dass bei einer Verfahrbewegung des Schlittens mit dem Messer in der Trennebene eine dünne Scheibe von dem Bearbeitungsobjekt abgetrennt wird. Das Messer wird hiernach in seine Ausgangsstellung zurückbewegt und das Bearbeitungsobjekt durch eine in der Regel sehr kleine Zustellungsverschiebebewegung < 10µm des Trägers relativ zu dem Messer in senkrechter Richtung zur Trennebene so positioniert, dass bei einem erneuten Verfahren des Messers wiederum ein dünnes Scheibchen vom Bearbeitungsobjekt abgetrennt wird.

Dieser Vorgang wird regelmäßig mehrfach wiederholt, bis eine dünne Scheibe von dem zu untersuchenden Bereich des Bearbeitungsobjektes gewonnen wurde.

Um zu vermeiden, dass sich das Bearbeitungsobjekt bei dem Schneidvorgang mit dem bekannten Mikrotom verformt, ist es regelmäßig erforderlich, das Bearbeitungsobjekt mittels zusätzlicher Maßnahmen zu verfestigen und/oder zu stützen. Als solche zusätzliche Maßnahme ist es bekannt, Bearbeitungsobjekte, deren Deförmationsfähigkeit durch Abkühlung verringert werden kann, vor dem Mikrotomieren tief zu kühlen. Nachteilig an diesem Verfahren ist, dass die aus gefrorenen Bearbeitungsobjekten gewonnenen, sog. Gefrierschnitte regelmäßig viele Details des Bearbeitungsobjektes nicht zeigen und darüber hinaus durch das Einfrieren Artefakte im Bearbeitungsobjekt erzeugt werden. Als weiterer Nachteil des Einfrierens ist bekannt, dass eine Deformation des Bearbeitungsobjektes und des abgetrennten dünnen Scheibchens mittels des Einfrierens nicht vollständig vermieden werden kann. Darüber hinaus erfordert das Einfrieren des Bearbeitungsobjektes zusätzlichen Aufwand, was das schnelle Herstellen von mikroskopierbaren Scheibchen verhindert und die Herstellung insgesamt verteuert.

Weiterhin ist als Maßnahme zur Stützung eines Bearbeitungsobjektes bekannt, dieses in ein Einbettungsmaterial einzubetten. Dabei ist es bei Bearbeitungsobjekten in Form von Gewebeproben regelmäßig erforderlich, das Bearbeitungsobjekt vollständig mit dem Einbettungsmaterial zu durchtränken, um eine ausreichende Verfestigung der Probe zu erzielen.

Als Einbettungsmaterialien sind Paraffine und verschiedene Kunststoffe bekannt. Zum Erzielen einer Durchtränkung ist bekannt, dem Bearbeitungsobjekt darin enthaltenes Wasser oder Fixationsmittel in einem mehrstufigen chemischen Prozess zu entziehen und durch ein Fluid zu ersetzen, welches sich mit dem Einbettungsmaterial gut mischen lässt. Hierauf folgend kann die Durchtränkung mit dem Einbettungsmaterial im flüssigen, gegebenenfalls durch Erwärmung verflüssigten, Zustand erfolgen und nachfolgend das Einbettungsmaterial verfestigt werden, z.B. durch Abkühlen aus einem zuvor erwärmten Zustand oder durch eine chemische Vernetzungsreaktion.

Die Einbettung bzw. Durchtränkung mit einem Einbettungsmaterial ist zeitlich und hinsichtlich des verfahrenstechnischen Aufwands noch aufwendiger als das Einfrieren des Bearbeitungsobjektes. Durch die Einbettung bzw. Durchtränkung wird oftmals eine Veränderung des Bearbeitungsobjektes erzeugt, so dass bei der späteren Untersuchung der gewonnenen Scheibchen Artefakte beobachtet werden. Diese Artefakte sind typischerweise eine Schrumpfung oder Ausdehnung der Probe. Im Falle von Gewebeproben treten regelmäßig auch durch Unterbindung oder Beeinflussung der Stoffwechselvorgänge in Geweben verursachte Veränderungen der Probe auf.

Die mit bekannten Mikrotomen gewonnenen dünnen Schnitte müssen häufig noch nachträglich bearbeitet werden. So ist es bekannt, diese Schnitte zu mikrodissektieren. Bei der Mikrodissektion wird mit einem fokussierten Laserstrahl ein Bereich des Probenschnittes mit einer zweidimensionalen Bewegung umfahren und auf diese Weise der umfahrene Bereich des Schnittes aus dem gesamten Probenschnitt herausgetrennt. Ein solches Mikrodissektionsverfahren ist beispielsweise aus WO 97/29354 bekannt. Das Verfahren der Mikrodissektion ermöglicht zwar eine Heraustrennung des zu mikrodissektierenden Bereichs aus einem Schnitt, jedoch ist es zuvor erforderlich, diesen Schnitt durch Mikrotomieren der Probe herzustellen. Bei diesem vorangehenden Mikrotomieren treten die zuvor beschriebenen Nachteile, wie beispielsweise die Notwendigkeit einer Verfestigung beziehungsweise Einbettung des Bearbeitungsobjektes, auf.

Aus WO02/057746A ist eine Mikrodissektionseinrichtung bekannt, bei welcher mittels eines senkrecht zur Oberfläche einer dünnen Probe liegenden Schnittes ein Bereich aus dieser Probe mittels einer Laserstrahlung herausgetrennt wird.

H. Lubatschowski et al beschreiben in einem Artikel zur "Application of ultrashort laser pulses for intrastromal refractive surgery", Graefe's Arch. Clin. Exp. Ophthalmol 238: 33-39, 2000 den Einsatz von Lasersystemen, die ultrakurze Laserpulse mit einer Dauer von 100-200 Femtosekunden erzeugen, im Bereich der intrastromalen refraktiven Chirurgie. Sie verwenden für ihre Untersuchungen ein "Kerr-Lens"-modengekoppeltes Titan-Saphir-Lasersystem mit nachfolgender "chirped pulse"-Verstärkung.

DE 100 20 559 beschreibt eine Vorrichtung zur Bearbeitung von Materialien mit ultrakurzen Laserpulsen. Die Vorrichtung umfasst eine Einrichtung zum Erzeugen einer Abfolge von Laserpulsen mit einer Dauer von unter 300ps und einer Repititionsrate zwischen 100KHz und 1 GHz. Die Vorrichtung wird insbesondere dazu benutzt, um durch Photodisruption eine Schnittwirkung bzw. Material-Ablation zu erzielen.

Der Erfindung lag die Aufgabe zugrunde, ein Mikrotom und ein Verfahren zum Mikrotomieren bereitzustellen, welches eine schonendere Mikrotomierung eines Bearbeitungsobjektes ermöglicht.

Die Aufgabe wird erfindungsgemäß durch ein Mikrotom der eingangs genannten Art gelöst, bei dem die Trenneinrichtung wenigstens eine Laser-Strahlungsquelle und Mittel zur Fokussierung der Laserstrahlung umfasst, wobei der durch die Fokussierung erzeugte Strahlfokus relativ zu dem Träger bewegbar ist und auf einen Ort der Trennfläche des Bearbeitungsobjektes leitbar ist, um an diesem Ort eine Materialtrennung zu bewirken. Das erfindungsgemäße Mikrotom umfasst weiterhin Mittel zum gepulsten Einbringen des Strahlfokus in den Ort der Trennfläche welche dazu eingerichtet sind, um Pulse mit einer Einwirkdauer < 1 Piko-Sekunde (1*10⁻¹² Sekunde) zu erzeugen.

Unter Einwirkdauer wird dabei die Zeit verstanden, für die der Strahlfokus an dem Ort der Trennfläche einwirkt. Die Energie, welche pro Laserpuls zum Schneiden notwendig ist, liegt im Bereich von einem Piko-Joule (pJ) bis einem Milli-Joule (mJ), vorzugsweise im Bereich von mehreren Piko-Joule. Eine Pulsenergie von 100 Nano-Joule (nJ) hat sich ebenfalls als vorteilhaft erwiesen.

Eine Einwirkdauer von weniger als einer Piko-Sekunde, ein sogenannter ultrakurzer Puls, hat sich dabei als besonders vorteilhaft für die meisten Materialien (insbesondere biologische Gewebe) erwiesen. Derzeit technisch realisierbare Einwirkdauern liegen dabei im Bereich bis hinunter zu zwanzig Femtosekunden (20*10⁻¹⁵ Sekunde), es sind jedoch auch, sofern technisch realisierbar, noch kürzere Einwirkdauern für das erfindungsgemäße Mikrotom sinnvoll verwendbar. Die Frequenz der einwirkenden Pulse liegt vorzugsweise oberhalb von 1000 Hertz. Insbesondere hat sich als vorteilhaft erwiesen, wenn die Pulsfrequenz oberhalb von 100.000 Hertz liegt. Besonders bevorzugt ist es, wenn die Pulsfrequenz zwischen 100kHz und 10MHz liegt.

Die für das erfindungsgemäße Verfahren bzw. die erfindungsgemäße Vorrichtung nutzbare Einwirkdauer und Pulsfrequenz kann in einem weiten Bereich variiert werden, ohne daß das erfindungsgemäße Verfahren durch die Variation nicht mehr ausführbar würde. Insbesondere kann dabei die Pulsdauer und die Pulsfrequenz auf das jeweils zu mikrotomierende Material abgestimmt werden.

Dabei kann die Einwirkdauer des Pulses länger oder kürzer als die Pause zwischen zwei Pulsen sein oder mit dieser übereinstimmen, wobei eine Pulsdauer bevorzugt wird, die kürzer ist als die Pause zwischen zwei Pulsen.

Wird eine ausreichend kurze Pulsdauer im Bereich weniger Femtosekunden gewählt, so ist die Pulsfrequenz in einem weiten Bereich variierbar. So lassen sich beispielsweise bei einer Pulsdauer von 100 fs Pulsfrequenzen von beispielsweise 1 kHz aber auch von 1 MHz realisieren.

Die Materialtrennung bei dem erfindungsgemäßen Mikrotom wird durch eine lokale Aufheizung des Materials über den Prozess der Multiphotonenabsorption an dem Ort der Trennfläche, auf den der Strahlfokus geleitet ist, und eine daraus folgende VergasungNerdampfung des Materials erreicht. Neben diesem angestrebtem Primäreffekt, dem sogenannten optischen Durchbruch, können auch sekundäre Nebeneffekte auftreten. Insbesondere bei hohen Pulsenergien können im Einzelfall als Nebeneffekte größere Gas- und Kavitationsblasen entstehen, welche ein im Vergleich zu kleinen Gasbläschen geringes Oberflächen/Volumen-Verhältnis haben und dadurch ihren Gasinhalt eventuell nur langsam an die Umgebung abgeben. Dies wäre nachteilig für den angestrebten Schneideffekt. Weiterhin könnten die größeren Gas- und Kavitationsbläschen Verformungen verursachen und die präzise Positionierung des Strahlfokus und damit die präzise Schnittführung behindern. Darüber hinaus könnten innerhalb des Bearbeitungsobjektes Druckwellen auftreten, die die Präzision des Schneidvorgangs eventuell beeinträchtigen könnten.

Der photodisruptive Effekt, also die angestrebte Schneidwirkung des Laserstrahls, erfordert regelmäßig eine gewisse mindestens zu erreichende Intensität am Ort der Trennfläche. Typischerweise liegt diese Intensität für Bearbeitungsobjekte aus transparentem Material bei etwa 10¹² W/cm² oder darüber. Die sekundären Nebeneffekte sind hingegen nicht von der Laserintensität abhängig sondern von der Laserenergie und ihr Ausmaß und ihre Anzahl nehmen mit steigenden Laserenergien zu. Um die sekundären Effekte daher zu verringern oder zu vermeiden ist es daher zweckmäßig, eine geringe Laserenergie und eine hohe Laserintensität zu erzielen. Dies kann beispielsweise durch gepulstes Einbringen des Strahlfokus in den Ort der Trennfläche erreicht werden.

Durch ein gepulstes Einbringen des Strahlfokus können diese negativen Effekte daher vermieden oder zumindest verringert werden. Dabei ist es insbesondere von Vorteil, wenn die Strahlfokuspulse hohe Intensitäten aber wenig Energie besitzen, d.h. die Energie des Pulses auf ein kleines Volumen konzentriert wird, da hierdurch negative Nebeneffekte, wie die zuvor beschriebene Erzeugung von größeren Gas- und Kavitationsblasen, vermieden werden können. Durch einen einzelnen Puls kann - abhängig vom Bearbeitungsobjekt und den eingestellten Trennparametern - eine teilweise oder vollständige Trennung an dem im Bereich des Strahlfokus angeordneten Ort der Trennfläche erzeugt werden. Darauf folgend kann, im Falle einer nur teilweisen lokalen Trennung, durch die Einwirkung eines oder weiterer Pulse auf den gleichen Ort der Trennfläche eine vollständige Trennung erzielt werden; nach einer Relativbewegung des Träges zu dem Strahlfokus kann dann an einem benachbarten Ort wiederum, eine Materialtrennung erzeugt werden, wodurch ein zusammenhängender Schnitt entlang der Trennfläche ausgeführt werden kann.

Das erfindungsgemäße Mikrotom bewirkt eine Materialtrennung durch die Einwirkung des Strahlfokus eines Laserstrahles. Diese Einwirkung bewirkt eine lokale Erwärmung des Materials des Bearbeitungsobjekts und in Folge dieser Erwärmung einen lokalen Übergang des Materials in den gasförmigen Zustand. Bei einer Relativbewegung zwischen dem Strahlfokus und dem Träger (mit dem Bearbeitungsobjekt) wirkt der Strahlfokus auf mehrere, zueinander benachbarte Orte der Trennfläche ein, so dass ein zusammenhängender Schnitt ausgeführt werden kann.

Das erfindungsgemäße Mikrotom vermeidet die bei bekannten, mit Messern oder Klingen arbeitenden Mikrotomen aufgrund der Schneidkraft auftretende Gefahr einer Verformung des Bearbeitungsobjektes oder der von dem Bearbeitungsobjekt abgetrennten dünnen Scheibe. Es ist daher bei Verwendung des erfindungsgemäßen Mikrotoms nicht erforderlich, das Bearbeitungsobjekt vor der Mikrotomierung einzubetten, zu durchtränken oder in anderer Weise zu verfestigen und/oder zu stützen. Artefakte in Folge von Einwirkungen eines Einbettungsmaterials oder eines Einfriervorganges werden somit vermieden.

Das erfindungsgemäße Mikrotom erlaubt eine freie Schnittführung.

Als überraschender Vorteil des erfindungsgemäßen Mikrotoms hat sich gezeigt, dass es mittels des Mikrotoms auch möglich ist, lebendes Gewebe zu trennen und dabei dünne Scheibchen in vitaler Form zu gewinnen.

Die Laser-Strahlungsquelle des erfindungsgemäßen Mikrotoms emittiert vorzugsweise eine Laserstrahlung mit einer Wellenlänge im sichtbaren (VIS) oder nahen infraroten (NIR) Spektralbereich, beispielsweise also zwischen etwa 700nm bis 1400nm, damit die Laserstrahlung nur eine geringe Abschwächung, zum Beispiel infolge Absorption/Streuung, innerhalb eines üblichen Bearbeitungsobjektes erfährt.

Vorzugsweise kann in allen drei Raumrichtungen eine Relativbewegung zwischen dem Strahlfokus und dem Träger ausgeführt werden. Hierzu kann beispielsweise eine mit dem Träger verbundene 3-D-Bewegungseinrichtung vorgesehen werden. Durch die dreidimensionale, relative Beweglichkeit des Strahlfokus zu dem Träger, und damit zu dem durch den Träger aufgenommenen Bearbeitungsobjekt, können mit dem erfindungsgemäßen Mikrotom Schnittführungen in einer gegenüber den bekannten Mikrotomen wesentlich variableren Weise ausgeführt werden. So ist es beispielsweise möglich, eine dünne Scheibe aus der Oberfläche eines Bearbeitungsobjektes herauszulösen, indem ein parallel zur Oberfläche liegender erster Trennflächenbereich und ein zweiter, senkrecht zu dieser Oberfläche liegender Trennflächenbereich, der den ersten Trennflächenbereich umrandet, erzeugt werden. Es ist folglich nicht mehr, wie bei bekannten Mikrotomen, erforderlich, stets eine gesamte, sich bis zu den Rändern des Bearbeitungsobjekt erstreckende Trennflächenebene vom Untersuchungsobjekt abzutrennen, sondern es können auch Teilbereiche (beispielsweise Bereiche mit rechteckigen oder runden Konturen) einer solchen Trennflächenebene herausgetrennt werden. Auf diese Weise ist eine sehr schonende Präparation eines Bearbeitungsobjektes möglich, bei der nur die für die Untersuchung wesentlichen Teile aus dem Bearbeitungsobjekt herausgetrennt werden.

Die Eindringtiefe des Strahlfokus der Laserstrahlung ist abhängig von dem Absorptionsvermögen des Materials/der Materialien des Bearbeitungsobjektes für die zum Schneiden verwendete Laserstrahlung. Die Laser-Strahlungsquelle eines erfindungsgemäßen Mikrotoms wird vorzugsweise so ausgelegt, dass ein Materialtrennung noch in einer Eindringtiefe von ≥10µm erreicht werden kann, bezogen auf biologisches Gewebe als Bearbeitungsobjekt. Eine solche Eindringtiefe entspricht der Dicke eines für eine mikroskopische Untersuchung benötigten Scheibchens oder überschreitet diese Dicke sogar. In vielen biologischen Geweben kann mit dem erfindungsgemäßen Mikrotom in einer Tiefe von 2mm und darüber geschnitten werden.

In Abhängigkeit von den Eigenschaften des Bearbeitungsobjektes, insbesondere von dessen Absorptionsvermögen, ist es mit der erfindungsgemäßen Vorrichtung auch möglich, eine Materialtrennung in einem Abstand von der Oberfläche des Bearbeitungsobjektes zu erzielen, welcher die übliche Dicke eines für eine Untersuchung zu erzeugenden dünnen Scheibchens überschreitet. Auf diese Weise können mit dem erfindungsgemäßen Mikrotom in wesentlich rationellerer Weise Scheibchen aus einer großen Tiefe eines Untersuchungsobjektes gewonnen werden, als es mit bekannten Mikrotomen möglich ist, da es nicht erforderlich ist, sich mittels Abtrennen vieler dünner Scheibchen bis zu der gewünschten Tiefe vorzuarbeiten.

Bei einer vorteilhaften Ausführungsform des erfindungsgemäßen Mikrotoms sind die Mittel zur Fokussierung der Laserstrahlung dazu eingerichtet, den Strahlfokus in zumindest einer Raumrichtung relativ zu dem Träger zu bewegen. So kann, beispielsweise indem die Fokussierungsmittel eingerichtet sind, die Divergenz/Konvergenz des Laserstrahls und damit die Brennweite zu ändern, und/oder indem die Fokussierungsmittel selbst relativ zum Träger beweglich sind, eine einfache und präzise zu steuernde Relativbewegung des Stahlfokus zu dem Träger (und dem zugehörigen Bearbeitungsobjekt) entlang der Strahlrichtung erreicht werden. Vorzugsweise umfassen die Mittel zur Fokussierung der Laserstrahlung verschieb- oder verschwenkbare optische Medien, beispielsweise Spiegel und/oder Linsen, um eine Relativbewegung des Strahlfokus in einer, zwei oder drei Raumrichtungen zu bewirken. So kann zur Veränderung der Lage des Strahlfokus ein optisches Medium in den Laserstrahl eingebracht werden oder ein im Laserstrahl angeordnetes optisches Medium verkippt werden, welches die optische Weglänge verkürzt oder verlängert.

Bei einer weiteren vorteilhaften Ausführungsform sind Mittel zur Führung der Laserstrahlung vorgesehen, um den Strahlfokus in zumindest einer Raumrichtung relativ zu dem Träger zu bewegen. Diese Mittel könne beispielsweise als Spiegel ausgeführt sein, die um eine oder zwei Achsen verschwenkbar sind.

Die Mittel zur Führung der Laserstrahlung können mit den zuvor beschrieben Mitteln zur Bewegung des Trägers vorteilhaft kombiniert werden. So kann beispielsweise eine Bewegungsrichtungkomponente mittels Führung des Laserstrahls und die anderen beiden Bewegungsrichtungskomponenten mittels Bewegung des Trägers realisiert werden. Ebenfalls ist es vorteilhaft, zwei Bewegungsrichtungskomponenten mittels Führung des Laserstrahls zu realisieren und die verbleibende dritte Komponente mittels Bewegung des Trägers.

Weiterhin vorteilhaft ist es, sowohl Mittel zur Führung des Laserstrahles als auch Mittel zur Relativbewegung zwischen Träger und Optik für die Relativbewegung des Strahlfokus zu dem Träger in einer oder mehreren Raumrichtungen vorzusehen. Hierdurch kann beispielsweise eine Grob- und Feineinstellung durch die entsprechenden verschiedenen Mittel zur Relativbewegung erreicht werden.

Bei einer weiteren vorteilhaften Ausführungsform weisen die Mittel zur Fokussierung der Laserstrahlung eine numerische Apertur ≥ 0,65, vorzugsweise eine numerische Apertur ≥ 1,2 auf. Ein wesentlicher Vorteil bei Verwendung der angegebenen, großen numerischen Aperturen ist, dass ein starker Fokussierwinkel erreicht wird und in den in Strahlrichtung vor und hinter dem Strahlfokus gelegenen Bereichen der Laserstrahlung eine relativ zur Strahlungsenergiedichte im Strahlfokus nur geringe Strahlungsenergiedichte vorliegt, wodurch eine scharf abgegrenzte Materialtrennung im Bereich des Strahlfokus erreicht wird und eine Materialtrennung in den Bereichen davor und dahinter vermieden wird.

Die Mittel zum gepulsten Einbringen können bei einer weiteren vorteilhaften Ausführungsform mit der Laserstrahlungsquelle zusammenwirken. So kann durch Mittel zur pulsierenden Unterbrechung der Energieversorgung der Laserstrahlungsquelle eine gepulste Laserstrahlung erzeugt werden und dadurch ein gepulstes Einbringen des Strahlfokus in den Ort der Trennfläche erreicht werden.

Die Mittel zum gepulsten Einbringen können insbesondere nach dem Prinzip der "chirped pulse"-Verstärkung arbeiten. Zum Prinzip der "chirped pulse"-Verstärkung wird auf die DE 100 20 559 und dort insbesondere auf den Absatz [0009] sowie auf die dort genannte Veröffentlichung D. Strickland, G. Mourou, Opt. Commun. 56, 219 (1985) verwiesen.

Die Mittel zum gepulsten Einbringen können bei einer vorteilhaften Ausführungsform des erfindungsgemäßen Mikrotoms dazu eingerichtet sein, einen kontinuierlich erzeugten Laserstrahl pulsierend zu unterbrechen und/oder pulsierend von dem Ort der Trennfläche wegzulenken.
Hierdurch wird, ohne dass man die Aussendung der Laserstrahlung aus der Laser-Strahlungsquelle unterbricht, ein gepulstes Einbringen des Strahlfokus in den Ort der Trennfläche erreicht. Der Strahl kann vorteilhafter Weise absorbiert werden. Der Strahl kann aber alternativ auch reflektiert und dadurch von dem Ort der Trennfläche weggelenkt werden zu einem Ort außerhalb des Bearbeitungsobjekts oder zu einer Stelle des Bearbeitungsobjekts, welche nicht für die beabsichtigte Untersuchung des Bearbeitungsobjekts relevant ist.

Bei einer weiteren vorteilhaften Ausführungsform eines Mikrotoms mit gepulster Einbringung des Strahlfokus sind Steuerungsmittel vorgesehen, welche die zeitliche Abfolge der Strahlungspausen steuern und/oder mit Mitteln zur Erfassung der zeitlichen Abfolge der Strahlungspausen verbunden sind und/oder welche die Relativbewegung zwischen dem Strahlfokus und dem Träger in Abhängigkeit von der zeitlichen Abfolge der Strahlungspausen steuern. Die Steuerungsmittel dienen zur Synchronisation der Laserstrahlpulse mit der Relativbewegung zwischen Strahlfokus und Träger. Als "zeitliche Abfolge" der Strahlungspausen werden hierbei die Dauer und die Frequenz der Strahlungspausen verstanden. Bei Einsatz dieser Steuerungsmittel wird in Abhängigkeit von der Abfolge der Strahlungsunterbrechungen bzw. der Strahlungseinwirkungen eine Bewegung zwischen Träger und Strahlfokus und hierdurch die Einwirkdauer der einzelnen Pulse der Laserstrahlung auf die zu trennenden Orte der Trennfläche gesteuert. Dabei können die Steuerungsmittel entweder (a) sowohl die zeitliche Abfolge der Strahlungspulse und die Relativbewegung steuern oder (b) die zeitliche Abfolge der Strählungspulse lediglich erfassen und in deren Abhängigkeit die Relativbewegung steuern. Bei Steuerungsart (b) kann beispielsweise auf Pulsfrequenzen reagiert werden, welche in Abhängigkeit der Belastung und der Energieversorgung der Laser-Strahlungsquelle variieren.

Weiterhin können Steuerungsmittel vorgesehen sein, welche mit Mitteln zur Erfassung der Relativbewegung zwischen dem Strahlfokus und dem Träger verbunden sind und die zeitliche Abfolge der Strahlungspausen in Abhängigkeit von der Relativbewegung steuern. Diese Ausführungsform ist insbesondere dann vorteilhaft, wenn eine manuelle Steuerung der Relativbewegung durch den Benutzer des Mikrotoms erfolgt. Auch diese Steuerungsmittel dienen zur Synchronisation der Laserstrahlpulse mit der Relativbewegung zwischen Strahlfokus und Träger. So kann in Abhängigkeit von der manuell gesteuerten Relativbewegung die Einwirkung bzw. Unterbrechung der gepulsten Laserstrahlung durch die Steuerungsmittel gesteuert werden. Auf diese Weise kann vermieden werden, dass bei schnellen Relativbewegungen keine oder eine nur unvollständige Durchtrennung in der Trennfläche erfolgt, denn die Pulsfrequenz oder die Einwirkdauer kann in diesem Fall erhöht werden. Weiterhin kann verhindert werden, dass eine zu hohe Strahlungsenergie in einen Ort eingebracht wird, wenn keine oder eine langsame Relativbewegung erfolgt, denn in diesem Fall können die Steuerungsmittel die Frequenz und/oder die Einwirkdauer verringern oder die Einwirkung des Strahlfokus auf den Ort der Trennfläche vollständig verhindern.

Bei einer weiteren vorteilhaften Ausführungsform sind Mittel zur Steuerung der Relativbewegung zwischen dem Träger und dem Strahlfokus entlang einer gekrümmten Trennfläche vorgesehen. Zur Steuerung der Relativbewegung entlang einer gekrümmten Trennfläche ist es regelmäßig erforderlich, die Relativbewegung in mindestens zwei, in der Regel drei Raumrichtungen auszuführen. Die Relativbewegung kann dabei durch Mittel zur Führung oder Mittel zur Fokussierung der Laserstrahlung oder durch eine mit dem Träger oder der Laserstrahlungsquelle zusammenwirkende Bewegungseinrichtung oder eine Kombination der vorgenannten Mittel erreicht werden. Mit der vorteilhaften Ausführungsform lässt sich von Untersuchungsobjekten mit gekrümmter Oberfläche eine oberflächenparallele, dünne Scheibe trennen. Weiterhin wird mit dieser Ausführungsform erreicht, dass aus einem Bearbeitungsobjekt eine dünne Scheibe herausgetrennt werden kann, die in beliebiger Ausrichtung und Ausgestaltung in dem Bearbeitungsobjekt liegt.

Die Relativbewegung zwischen Strahlfokus und Träger kann automatisch oder manuell erfolgen. Die manuelle Steuerung kann beispielsweise über eine mit den Steuerungsmitteln zusammenwirkende Bedienungseinheit, beispielsweise einen Joystick, erfolgen, die dem Benutzer eine manuelle Steuerung der Relativbewegung mittels der Fokussiermittel, der Leitmittel und/oder der Bewegungseinrichtung ermöglicht.

Das erfindungsgemäße Mikrotom umfasst vorteilhafterweise Mittel zur Beobachtung des Bearbeitungsobjekts. Die Beobachtungsmittel können beispielsweise als Lupe, Mikroskop oder ähnliches ausgeführt sein. Sie dienen beispielsweise dazu, den Materialtrennungsvorgang vorzubereiten, indem mit Hilfe der Beobachtungsmittel eine Definition der Ausrichtung und Gestaltung der Trennfläche und folglich der Relativbewegung zwischen Strahlfokus und Träger vorgenommen wird. Weiterhin können die Beobachtungsmittel dazu dienen, den Materialtrennvorgang selbst zu beobachten, um so beispielsweise eine Kontrolle der automatisch ausgeführten Relativbewegung oder um eine manuelle Steuerung der Relativbewegung durchzuführen.

Die Beobachtungsmittel können insbesondere ein optisches Mikroskop umfassen, das nach dem Auflicht- und/oder Durchlichtverfahren betreibbar ist. Dabei eignet sich insbesondere ein optisches Mikroskop, dessen Strahlenachse etwa parallel zu der Strahlenachse des Laserstrahls im Bereich des Strahlfokus liegt, insbesondere mit dieser etwa zusammenfällt. Weiterhin ist insbesondere ein optisches Mikroskop geeignet, welches sowohl als Durchlicht- wie auch als Auflichtmikroskop arbeiten kann, um dadurch, in Abhängigkeit von der Beschaffenheit des Bearbeitungsobjekts, also insbesondere dessen geometrischen Abmessungen und Absorptionseigenschaften für die zur Beobachtung eingesetzte Strahlung, ein jeweils geeignetes Mikroskopierverfahren einsetzen zu können.

Weiterhin können die Beobachtungsmittel Mittel zur Darstellung von zumindest einem Abschnitt des Bearbeitungsobjekts anhand der zurück gestreuten Laserstrahlung beinhalten. Hierdurch wird in vereinfachter Weise eine Beobachtung des Bearbeitungsobjekts ohne zusätzliche Beleuchtungseinrichtungen möglich.

Die vorgenannten Darstellungsmittel können insbesondere einen Detektor zur Erfassung der von dem Abschnitt des Bearbeitungsobjekts zurückgestreuten Strahlung, Mittel zur Erfassung der von einer Referenzebene reflektierten kohärenten Strahlung, und Mittel zur Erzeugung einer bildlichen Darstellung des Abschnitts des Bearbeitungsobjekts mittels Überlagerung der von dem Abschnitt des Bearbeitungsobjekts zurück gestreuten Laserstrahlung und der von der Referenzebene reflektierten kohärenten Strahlung umfassen. Diese Ausführungsform ist insbesondere dann vorteilhaft, wenn die Intensität der einzelnen Laserpulse so eingestellt werden kann, dass ein materialtrennender Effekt (eine "photodisruptive Wirkung") nicht auftritt und insbesondere die Intensität der Laserpulse zum Zwecke der Darstellung des Bearbeitungsobjekts geringer eingestellt werden kann als zum Zwecke der Materialtrennung. Durch die besagten Merkmale wird die Darstellung der Probe mit der Methode der optischen Kohärenztomographie (OCT) erreicht. Eine detaillierte Beschreibung des OCT-Darstellungsverfohren kann der DE 100 20 559 A1 insbesondere deren Absätzen 0037, 0038 und 0041-0051 entnommen werden.

Bezugnehmend auf diese Offenlegungsschrift kann das OCT-Verfahren kurz zusammengefasst werden als ein Abbildungsverfahren, bei dem eine kohärente Strahlung, wie beispielsweise eine Laserstrahlung, geteilt wird, ein erster Teil der Laserstrahlung auf ein abzubildendes Objekt, in diesem Fall das Bearbeitungsobjekt, gerichtet wird und ein zweiter Teil auf eine Referenzebene gerichtet wird. Die von dem abzubildenden Objekt und der Referenzebene reflektierten Strahlungsanteile werden erfasst und zur Deckung gebracht und durch dreidimensionales Abscannen des abzubildenden Objekt kann eine dreidimensionale Darstellung erzeugt werden, indem die Interferenz der überlagerten Pulse mittels eines Fotodetektors detektiert wird

Mit Hilfe des OCT-Verfahrens können Strukturen mit einer Auflösung von bis zu 1 µm dargestellt werden. Das OCT-Verfahren hat eine von dem Absorptionsvermögen des untersuchten Materials abhängige Eindringtiefe. Selbst in stark streuende Geweben wird regelmäßig eine Eindringtiefe von >2mm erreicht.

Ein weiterer Aspekt der Erfindung ist ein Verfahren zum Mikrotomieren mit den Merkmalen gemäß Anspruch 14. Das Verfahren ist insbesondere geeignet, um mit dem erfindungsgemäßen Mikrotom ausgeführt zu werden.

Einige vorteilhafte Verfahrensformen sind in den Ansprüchen 15 - 21 angegeben und entsprechen einer Ausführung des Verfahrens mittels vorteilhafter Ausführungsformen des erfindungsgemäßen Mikrotoms. Insoweit wird auf die vorstehende Beschreibung verwiesen.

In manchen Fällen ist es vorteilhaft, wenn in einer ersten Phase des Schneidvorgangs ein oder mehrere voneinander beabstandete Bereiche der Trennfläche getrennt werden und in einer letzten Phase des Schneidvorgangs eine vollständige Trennung entlang der Trennfläche erfolgt, indem die zwischen den beabstandeten Bereichen liegenden Bereiche getrennt werden. Die Aufteilung des Trennvorgangs in eine erste Phase und eine letzte Phase, wobei die letzte Phase beispielsweise eine der ersten Phase direkt folgende zweite Phase sein kann, ist zur Vermeidung von Deformationen während des Trennvorgangs und zur Vermeidung von Deformationen der abgetrennten dünnen Scheibe vorteilhaft.

In der ersten Phase wird dabei vorzugsweise an mehreren lokal umgrenzten Bereichen eine Materialtrennung erzeugt. Zwischen diesen Bereichen bleiben ungetrennte Bereiche, oder "Stege", stehen. Diese Stege halten die nach der ersten Phase erst teilweise abgetrennte Scheibe noch am Bearbeitungsobjekt fest und vermeiden so ein Verformen der Scheibe. In folgenden Phasen des Trennvorgangs erfolgt dann eine gezielte Trennung der Stege, die wegen stabilisierten Formen des Bearbeitungsobjekts und der stabilisierten Lage der abzutrennenden Scheibe innerhalb des Bearbeitungsobjekts präzise vom Strahlfokus erfasst werden können.

Darüber hinaus wird durch diese Fortbildung des Verfahrens vermieden, dass hohe Energiemengen in einen eng umgrenzten Bereich eingebracht werden, wodurch Nachteile wie die Bildung großer Gas- oder von Kavitationsblasen sowie Veränderungen des Materials des Bearbeitungsobjekts in Folge thermischer Einflüsse vermieden werden. Insbesondere können die kleinen Gasbläschen im Bereich der in der ersten Phase durchtrennten Bereiche bereits an die Umgebung abgegeben sein, wenn die Trennung in der letzten Phase erfolgt.

Ein weiterer Aspekt der Erfindung ist die Verwendung einer Vorrichtung, welche eine Aufnahmevorrichtung mit einem Träger zum Aufnehmen von zumindest einem Abschnitt eines Bearbeitungsobjekts, und eine Trenneinrichtung, wenigstens eine Laser-Strahlungsquelle und Mittel zur Fokussierung der Laserstrahlung umfasst, wobei der durch die Fokussierung erzeugte Strahlfokus relativ zu dem Träger bewegbar ist, und auf einen Ort der Trennfläche des Bearbeitungsobjekts leitbar ist, um an diesem Ort eine Materialtrennung zu bewirken, zum Mikrotomieren eines Bearbeitungsobjektes.

Diese Verwendungsweise der zuvor beschriebenen Vorrichtung ermöglicht eine frei wählbare Schnittführung bei der Mikrotomierung. Es kann ein Schnitt in frei wählbarer Tiefe des Bearbeitungsobjekts und mit frei wählbarer Lage ausgeführt werden, wobei diese Parameter durch die Apertur und die Strahlabsorptionseigenschaften des zu schneidenden Gewebes beeinflusst werden. Die Schnittfläche muss bei dieser Verwendungsweise nicht eben sein, sondern kann unregelmäßig und/oder gekrümmt sein. Eine Fixierung des Bearbeitungsobjekts ist nicht erforderlich.

Eine vorteilhafte Ausführungsform des erfindungsgemäßen Mikrotoms wird nachfolgend unter Bezugnahme auf die beigefügten Figuren beschrieben. Darin zeigen:
- Fig. 1: eine schematische Darstellung des erfindungsgemäßen Mikrotoms, und
- Fig.2: eine schematische, quergeschnittene Darstellung eines Bearbeitungsobjekts auf einem Träger.

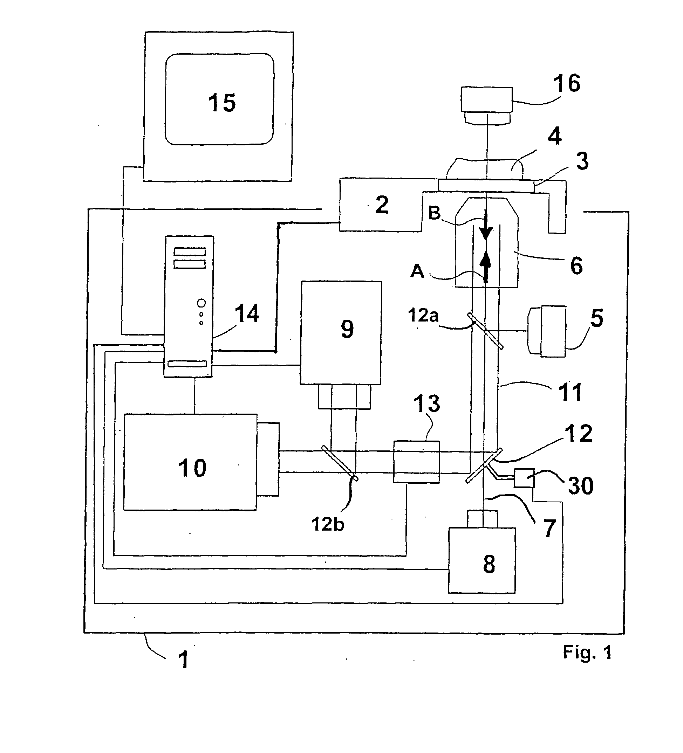

Das in Fig. 1 dargestellte Mikrotom weist eine Glasplatte 3 als Träger für ein Bearbeitungsobjekt ("Probe") 4 auf. Die Glasplatte 3 ist mit einer XYZ-Verfahreinheit 2 verbunden. Durch die Auflage der Probe 4 auf der Glasplatte 3 wird bei weichen, flexiblen Proben eine vorteilhafte Glättung erzielt. Diese Glättungswirkung kann gegebenenfalls durch eine zweite Glasplatte (nicht dargestellt) verstärkt werden, indem die Probe zwischen dieser zweiten Glasplatte und der Glasplatte 3 eingesetzt und gepresst wird.

Auf einer Seite der Glasplatte 3 ist ein Fokussierobjektiv 6 angeordnet, dass mehrere teleskopartig angeordnete Linsen (nicht dargestellt) aufweist. Der Abstand der Linsen zueinander und der Abstand der Linsen zu der Glasplatte 3 kann variiert werden. Auf diese Weise wird die Divergenz/Konvergenz eines Laserstrahls 11, der durch das Fokussierobjektiv 6 hindurch läuft, verändert. Die optische Achse 7 des Fokussierobjektivs 6 liegt senkrecht zu der Plattenebene der Glasplatte 3.

Ebenfalls in der optischen Achse 7 des Fokussierobjektivs 6 ist auf der dem Fokussierobjektiv 6 gegenüberliegenden Seite der Glasplatte 3 eine Zusatzlichtquelle 16 angeordnet. Die Zusatzlichtquelle 16 dient der Beleuchtung der Probe 4 zur Darstellung der Probe oder von Teilen der Probe mittels eines optischen Durchlichtmikroskopieverfahrens.

Die XYZ-Verfahreinheit 2 ist an einem Gehäuse 1 befestigt. Ebenfalls an diesem Gehäuse 1 befestigt ist die Zusatzlichtquelle 16. Innerhalb des Gehäuses 1 sind das Fokussierobjektiv 6 und ein Lasergenerator 10 mit Laser-Strahlungsquelle angeordnet, die den Laserstrahl 11 aussendet. Der Laserstrahl 11 läuft zunächst in etwa parallel zu der Ebene der Glassplatte 3, wird dazu mittels eines teildurchlässigen Spiegels 12 um etwa 90° abgelenkt und verläuft hiernach koaxial zur optischen Achse des Fokussierobjektives 6.

Durch Verschwenken oder Verschieben des Spiegels 12 kann der Laserstrahl zur optischen Achse 7 abgewinkelt werden und somit der Strahlfokus des Laserstrahls in den parallel zur Ebene der Glasplatte 3 liegenden Richtungen verschoben werden. Am Spiegel 12 ist eine Bewegungseinrichtung 30 befestigt, welche den Spiegel verschieben und verschwenken kann. Vorzugsweise kann der Spiegel um zwei senkrecht zueinander stehende Achsen verschwenkt werden, deren Schnittpunkt dabei vorzugsweise auf der Mittelachse des Laserstrahls 11 liegt. Die Bewegungseinrichtung 30 ist mit einem Rechner 14 verbunden, der die Verschwenkung des Spiegels 12 und somit den Ablenkungswinkel des Laserstrahls durch den Spiegel 12 steuert. Eine Verschwenkung des Spiegels 12 aus der in Figur 1 dargestellten Lage bewirkt eine Änderung des Strahlverlaufs im Bereich zwischen dem Spiegel 12 und der Probe 4. Der Laserstrahl verläuft dadurch insbesondere nicht mehr koaxial zu der optischen Achse des Fokussierobjektivs 6.

Zwischen dem teildurchlässigen Spiegel 12 und dem Lasergenerator 10 mit Laser-Strahlungsquelle ist eine Vorfokussiereinrichtung 13 in der Strahlachse des Laserstrahls 11 angeordnet, welche eine Veränderung der Divergenz bzw. der Konvergenz des Laserstrahls ermöglicht. Durch Veränderung der Divergenz bzw. Konvergenz kann die Lage des Strahlfokus in Strahlungsrichtung hinter dem Fokussierobjektiv 6, entlang der optischen Achse des Fokussierobjektives 6 verschoben werden. Die Vorfokussierungseinrichtung 13 besteht aus mehreren Linsen (nicht dargestellt), und zwar vorzugsweise aus zwei Linsen, die teleskopartig angeordnet sind und deren Abstand zueinander verändert werden kann, um hierdurch die Divergenz/Konvergenz des Laserstrahls zu verändern.

Zwischen dem teildurchlässigen Spiegel 12 und dem Fokussierobjektiv 6 ist ein teildurchlässiger Beleuchtungsspiegel 12a im Strahlengang des Laserstrahls 11 angeordnet. Durch den Beleuchtungsspiegel 12a wird Licht, dass aus einer neben dem Laserstrahl angeordneten Lichtquelle 5 zur Beleuchtung der Probe emittiert wird, auf die Probe projiziert, um eine mikroskopische Darstellung der Probe 4 mittels des Auflichtmikroskopieverfahrens zu ermöglichen.

Der Laserstrahl 11 wird durch den teildurchlässigen Beleuchtungsspiegel 12a nicht abgelenkt, sondern durchdringt diesen Beleuchtungsspiegel in Richtung auf das Fokussierobjektiv 6.

Hinter dem teildurchlässigen Spiegel 12 ist in der optischen Achse 7 eine Digitalkamera 8 angeordnet. Diese Digitalkamera 8 erfasst die von der Probe 4 reflektierte Strahlung bzw. die von der Zusatzlichtquelle 16 ausgesendete und durch die Probe hindurchgetretene Strahlung. Die Digitalkamera 8 ist mit dem Rechner 14 verbunden, der die von der Kamera 8 übermittelten Bilddaten verarbeitet und eine Darstellung der Probe 4 auf einem Monitor 15 ausgibt.

Anstelle der Kamera 8 kann dabei auch eine Okulareinrichtung (nicht dargestellt) vorgesehen sein, die eine direkte Betrachtung der Probe ermöglicht. Weiterhin kann eine Okulareinrichtung mit daran angesetzter digitaler Kamera 8 vorgesehen sein, die sowohl eine direkte Betrachtung als auch eine Betrachtung der Probe auf dem Monitor ermöglicht.

Zwischen der Vorfokussiereinrichtung 13 und dem Lasergenerator 10 mit Laser-Strahlungsquelle ist ein teildurchlässiger Ablenkspiegel 12b im Strahlengang des Laserstrahls 11 angeordnet. Der teildurchlässige Ablenkspiegel 12b zweigt einen Teil der von dem Untersuchungsobjekt 4 reflektierten Laserstrahlung in eine OCT-Detektoreinheit 9 ab. Die OCT-Detektoreinheit 9 ist mit dem Rechner 14 verbunden und übermittelt Bilddaten an diesen Rechner 14, der daraus eine Darstellung der Probe mittels der Methode der optischen Kohärenztomographie berechnet und diese Darstellung auf dem Monitor 15 ausgibt. Alternativ kann diese Darstellung der Probe mittels der Methode der optischen Kohärenztomographie bereits in der OCT-Detektoreinheit 9 berechnet weden und dann direkt auf einem Bildschirm o.ä. dargestellt werden oder zum Zwecke einer Darstellung an den Rechner 14 übermittelt werden.

Der Rechner 14 dient darüber hinaus der Steuerung der Relativbewegung zwischen dem Strahlfokus und der Glasplatte 3, welche als Träger für die Probe 4 dient. Zu diesem Zweck ist der Rechner 14 mit der Vorfokussiereinrichtung 13, der Bewegungseinrichtung 30 und der XYZ-Verfahreinheit 2 verbunden.

Darüber hinaus steuert der Rechner 14 das An- und Ausschalten des Lasergenerators 10 mit Laser-Strahlungsquelle und das gepulste Einwirken des Strahlfokus des Laserstrahls auf den Ort der Trennfläche der Probe 4. Zu diesem Zweck ist der Rechner 14 mit der Lasergenerator 10 mit Laser-Strahlungsquelle verbunden.

Der Rechner 14 kann daher ebenfalls eine Abstimmung zwischen der gepulsten Laserstrahlung, dass heisst der Pulsfrequenz und Einwirkdauer, und der Relativbewegung zwischen Strahlfokus und Probe bzw. Glasplatte 3, welche durch Verfahren der XYZ-Verfahreinheit, Veränderung der Konvergenz/Divergenz in der Vorfokussiereinrichtung 13 und/oder Verschwenken/Verschieben der Bewegungseinrichtung 30 erreicht wird.

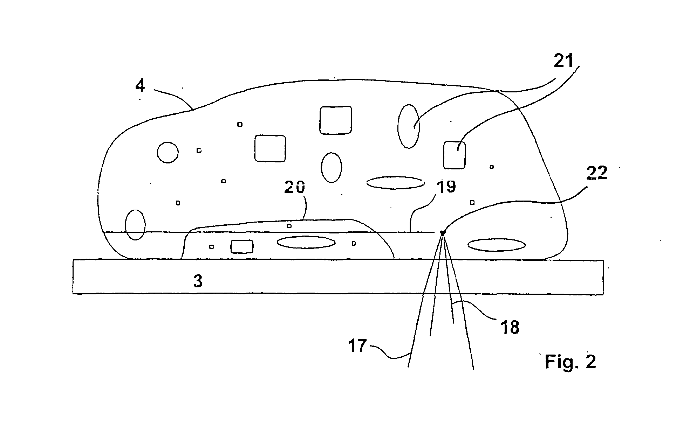

Wie aus Figur 2 zu erkennen, liegt die Probe 4, durch Schwerkraft gehalten, auf der Glasplatte 3 bündig auf. In der Probe 4 sind mehrere Einschlüsse 21, welche Gasblasen, Festkörper von anderer Konsistenz oder ähnliches sein können.

Der Laserstrahl 11 durchdringt die Glasplatte 3 senkrecht zu deren Plattenebene als konvergierender Strahl 17. Durch die Konvergenz des Strahls 17 wird ein Strahlfokus 22 erzeugt, der an einem Ort einer Trennfläche 19 eine Materialtrennung verursacht. Durch Verschieben der Glasplatte 3 in einer Richtung senkrecht zu der Längsachse des Laserstrahls 11 bzw. 17 wird der Strahlfokus 22 entlang der Trennfläche 19 bewegt.

Das erfindungsgemäße Mikrotom ermöglicht darüber hinaus durch Bewegen der Glasplatte 3 in allen drei Raumrichtungen die Führung des Strahlfokus 22 entlang einer gekrümmten Trennfläche, um zum Beispiel eine Aushöhlung zu erzeugen, wie z.B. in Fig. 2 beispielsweise als Trennfläche 20 dargestellt. Dabei kann die Komponente der Verfahrbewegung in Richtung der Längsachse des Laserstrahls 11 bzw. 17 auch durch eine Änderung der Konvergenz/Divergenz in der Vorfokussiereinrichtung 13 erreicht werden. Zum Führen des Strahlfokus 22 entlang der Trennfläche 20 wird in diesem Falle eine Verfahrbewegung der Glasplatte 3 in zwei Raumrichtungen (XY-Richtung) mit einer Veränderung der Strahlfokuslage in Relation zu der Glasplatte 3 in einer senkrecht zu der XY-Richtung liegenden Richtung durch Veränderung der Konvergenz/Divergenz mittels der Vorfokussiereinrichtung 13 kombiniert.

Das durch den konvergierenden Laserstrahl 17 in den Strahlfokus 22 einfallende Laserlicht (Pfeil A in Figur 1) wird von dem Material der Probe 4 im Bereich des Strahlfokus teilweise reflektiert und in Form eines divergierenden Reflektionslaserstrahls 18 (Pfeil B in Fig. 1) zurückgeworfen. Der Reflektionslaserstrahl 18 durchläuft das Fokussierobjektiv 6 und die Vorfokussiereinrichtung 13 in umgekehrter Richtung wie der von der Laser-Strahlungsquelle ausgesendete Laserstrahl auf seinem Weg zur Probe 4. Der Reflektionslaserstrahl 18 kann von der OCT-Detektoreinheit erfasst werden und zur Darstellung einer Abbildung der Probe mittels des Verfahrens der optischen Kohärenztomographie verwendet werden.

Bei einer vorteilhaften Ausführungsform des erfindungsgemäßen Mikrotomierverfahrens mit dem erfindungsgemäßen Mikrotom definiert ein Benutzer zunächst, beispielsweise anhand einer mittels der Kamera 8 oder der OCT-Detektoreinheit 9 gewonnenen Abbildung der Probe 4, eine Umrandung einer Fläche (beispielsweise ein Rechteck oder einen Kreis) und definiert anschließend durch Angabe der Schnitttiefe das auszuschneidende Volumen. Dieses Volumen wird dann herausgetrennt durch automatisches Abrastern mittels Relativbewegung des Strahlfokus entlang der vorgegebenen Fläche in der vordefinierten Tiefe und anschließend mehrmaliges Umfahren der Fläche entlang ihrer Ränder bei gleichzeitig kontinuierlicher oder gestufter Annäherung des Strahlfokus aus der Tiefe der Probe an die Oberfläche.

## Patentansprüche

1. Mikrotom, umfassend:
- eine Aufnahmevorrichtung mit einem Träger (3) zum Aufnehmen von zumindest einem Abschnitt eines Bearbeitungsobjekts (4), und
- eine Trenneinrichtung (6, 10, 13),
- wenigstens eine Laser-Strahlungsquelle (10) und
- Mittel zur Fokussierung (6; 13) der Laserstrahlung,
wobei der durch die Fokussierung erzeugte Strahlfokus (22)
- relativ zu dem Träger (3) bewegbar ist, und
- auf einen Ort der Trennflächen (19: 20) des Bearbeitungsobjekts (4) leitbar ist, um an diesem Ort eine Materialtrennung zu bewirken,
**dadurch gekennzeichnet, dass** Mittel zum gepulsten Einbringen (14) des Strahlfokus in den Ort der Trennfläche vorgesehen sind, die dazu eingerichtet sind, Pulse mit einer Einwirkdauer < 1*10⁻¹² Sekunde zu erzeugen und dass das Mikrotom ausgebildet ist, um einen parallel zur Oberfläche liegenden Trennflächenbereich zu erzeugen.

2. Mikrotom nach Anspruch 1,
**dadurch gekennzeichnet, dass** die Mittel zur Fokussierung (6; 13) der Laserstrahlung dazu eingerichtet sind, den Strahlfokus in zumindest einer Raumrichtung relativ zu dem Träger zu bewegen.

3. Mikrotom nach Anspruch 1 oder 2,
**dadurch gekennzeichnet, dass** Mittel zur Führung (12) der Laserstrahlung vorgesehen sind, um den Strahlfokus in zumindest einer Raumrichtung relativ zu dem Träger zu bewegen.

4. Mikrotom nach einem der vorhergehenden Ansprüche,
**dadurch gekennzeichnet, dass** die Mittel zur Fokussierung (6; 13) der Laserstrahlung eine numerische Apertur ≥ 0,65, vorzugsweise eine numerische Apertur ≥ 1,2 aufweisen.

5. Mikrotom nach einem der vorangehenden Ansprüche,
**dadurch gekennzeichnet, dass** die Mittel zum gepulsten Einbringen eingerichtet sind, den Strahl pulsierend zu unterbrechen und/oder von dem Ort der Trennfläche wegzulenken.

6. Mikrotom nach einem der vorangehenden Ansprüche,
**dadurch gekennzeichnet, dass** die Mittel zum gepulsten Einbringen mit der Strahlungsquelle zusammenwirken, um den Strahl pulsierend zu unterbrechen.

7. Mikrotom nach einem der vorangehenden Ansprüche,
**dadurch gekennzeichnet, dass** Steuerungsmittel (14) vorgesehen sind, welche
- die zeitliche Abfolge der Strahlungspausen steuern und/oder mit Mitteln zur Erfassung der zeitlichen Abfolge der Strahlungspausen verbunden sind und/oder
- die Relativbewegung zwischen dem Strahlfokus und dem Träger in Abhängigkeit von der zeitlichen Abfolge der Strahlungspausen steuern.

8. Mikrotom nach einem der vorangehenden Ansprüche,
**dadurch gekennzeichnet, dass** Steuerungsmittel vorgesehen sind, welche
- mit Mitteln zur Erfassung der Relativbewegung zwischen dem Strahlfokus und dem Träger verbunden sind, und
- die zeitliche Abfolge der Strahlungspausen in Abhängigkeit von der Relativbewegung steuern.

9. Mikrotom nach einem der vorhergehenden Ansprüche;
**dadurch gekennzeichnet, dass** Mittel vorgesehen sind zur Steuerung der Relativbewegung zwischen dem Träger (3) und dem Strahlfokus (22) entlang einer gekrümmten Trennfläche (20).

10. Mikrotom nach einem der vorhergehenden Ansprüche,
**dadurch gekennzeichnet, dass** Mittel zur Beobachtung (9, 8, 14, 15, 5, 16) des Bearbeitungsobjekts vorgesehen sind.

11. Mikrotom nach Anspruch 10,
**dadurch gekennzeichnet, dass** die Beobachtungsmittel ein optisches Mikroskop umfassen, das nach dem Auflicht- und/oder Durchlichtverfahren betreibbar ist.

12. Mikrotom nach Anspruch 10 oder 11,
**dadurch gekennzeichnet, dass** die Beobachtungsmittel Mittel (9, 14) zur Darstellung von zumindest einem Abschnitt des Bearbeitungsobjekts anhand der zurück gestreuten Laserstrahlung beinhalten.

13. Mikrotom nach Anspruch 12,
**dadurch gekennzeichnet, dass** die Darstellungsmittel umfassen:
- einen Detektor (9) zur Erfassung der von dem Abschnitt der Bearbeitungsobjekt zurückgestreuten Strahlung,
- Mittel zur Erfassung (9) der von einer Referenzebene reflektierten kohärenten Strahlung, und
- Mittel zur Erzeugung (9; 14) einer bildlichen Darstellung des Abschnitts der Bearbeitungsobjekt mittels Überlagerung der von dem Abschnitt der Bearbeitungsobjekt zurück gestreuten Laserstrahlung und der von der Referenzebene reflektierten kohärenten Strahlung.

14. Verfahren zum Mikrotomieren von Bearbeitungsobjekten (4), mit den Schritten
- Aufnehmen von zumindest einem Abschnitt des Bearbeitungsobjekts durch einen Träger (3) einer Aufnahmevorrichtung,
- zumindest teilweises Trennen des Bearbeitungsobjekts mittels einer Schneideinrichtung, wobei
- eine Laserstrahlung (11) von einer der Schneideinrichtung zugeordneten Strahlungsquelle (10) abgegeben wird und
- diese Laserstrahlung fokussiert wird und **dadurch gekennzeichnet, dass** der Strahlfokus (22) pulsierend mit einer Einwirkdauer eines Pulses < 1*10⁻¹² Sekunde auf einen Ort eines parallel zur Oberfläche liegenden Trennflächenbereichs (19; 22) eines Bearbeitungsobjekts geleitet wird, um an diesem Ort eine Materialtrennung zu erzeugen, wobei der Strahlfokus (22) relativ zu dem Träger (3) in zwei oder drei Raumrichtungen bewegt wird, so dass das Bearbeitungsobjekt mikrotomiert wird

15. Verfahren nach Anspruch 14,
**dadurch gekennzeichnet, dass** der Strahlfokus entlang einer gekrümmten Fläche (20) geführt wird.

16. Verfahren nach Anspruch 14 oder 15,
**dadurch gekennzeichnet, dass** die Abfolge der Pulse und die Relativbewegung zwischen Träger und Strahlfokus zeitlich zueinander gesteuert werden.

17. Verfahren nach einem der Ansprüche 14 bis 16,
**dadurch gekennzeichnet, dass** die Trennfläche vor dem Schneidvorgang vorherbestimmt wird und der Strahlfokus entlang dieser Trennfläche automatisch entlang geführt wird.

18. Verfahren nach Anspruch 17,
**dadurch gekennzeichnet, dass** vor dem Schneidvorgang eine Abbildung zumindest eines Abschnitts des Bearbeitungsobjekts mittels eines lichtmik-roskopischen Abbildungsverfahrens erstellt wird und die Vorherbestimmung der Trennfläche anhand dieser Abbildung vorgenommen wird.

19. Verfahren nach Anspruch 17,
**dadurch gekennzeichnet, dass** vor dem Schneidvorgang eine Abbildung zumindest eines Abschnitts des Bearbeitungsobjekts mittels des Verfahren der optischen Kohärenztomographie erstellt und die Vorherbestimmung der Trennfläche anhand dieser Abbildung vorgenommen wird.

20. Verfahren nach einem der Ansprüche 14 bis 17,
**dadurch gekennzeichnet, dass** während des Schneidvorgangs eine Abbildung zumindest eines Abschnitts des Bearbeitungsobjekts mittels eines lichtmikroskopischen Abbildungsverfahrens und/oder des Verfahrens der optischen Kohärenztomographie erstellt wird und dem Benutzer eine Wiedergabe dieser Abbildung bereit gestellt wird, anhand welcher er den Strahlfokus führen kann.

21. Verfahren nach einem der Ansprüche 14 bis 20,
**dadurch gekennzeichnet, dass** in einer ersten Phase des Schneidvorgangs ein oder mehrere voneinander beabstandete Bereiche der Trennfläche getrennt werden und in einer letzten Phase des Schneidvorgangs eine vollständige Trennung entlang der Trennfläche erfolgt, indem die zwischen den beabstandeten Bereichen liegenden Bereiche getrennt werden.

22. Verwendung einer Vorrichtung, umfassend
- eine Aufnahmevorrichtung mit einem Träger (3) zum Aufnehmen von zumindest einem Abschnitt eines Bearbeitungsobjekts (4),
- eine Trenneinrichtung (6, 10, 13),
- wenigstens eine Laser-Strahlungsquelle (10), und
- Mittel zur Fokussierung (6; 13) der Laserstrahlung,
wobei der durch die Fokussierung erzeugte Strahlfokus (22)
- relativ zu dem Träger (3) bewegbar ist, und
**dadurch gekennzeichnet, dass** der Strahlfokus auf einen Ort eines parallel zur Oberfläche liegenden Trennflächenbereichs (19; 20) des Bearbeitungsobjekts (4) leitbar ist, um an diesem Ort eine Materialtrennung zu bewirken, zum Mikrotomieren eines Bearbeitungsobjektes (4) und dass Mittel zum gepulsten Einbringen (14) des Strahlfokus in den Ort der Trennfläche vorgesehen sind, die dazu eingerichtet sind, Pulse mit einer Einwirkdauer < 1*10⁻¹² Sekunde zu erzeugen.

## Claims

1. Microtome, comprising:
- a holding device with a support (3) for holding at least one segment of an object (4) to be processed, and
- a separating instrument (6, 10, 13),
- at least one laser radiation source (10) and
- means (6; 13) for focusing the laser radiation, the beam focus (22) generated by the focusing being
- movable relative to the support (3), and
- directable onto a position on the separation faces (19; 20) of the object (4) to be processed, in order to cause material separation at this position,
**characterised in that** means (14) are provided for pulsed application of the beam focus at the position on the separation face, which means are adapted to generate pulses with an action time < 1*10⁻¹² second, and **in that** the microtome is designed to generate a separation face region lying parallel to the surface.

2. Microtome according to Claim 1,
**characterised in that** the means (6; 13) for focusing the laser radiation are adapted to move the beam focus relative to the support in at least one spatial direction.

3. Microtome according to Claim 1 or 2,
**characterised in that** means (12) are provided for guiding the laser radiation, in order to move the beam focus relative to the support in at least one spatial direction.

4. Microtome according to one of the preceding claims,
**characterised in that** the means (6; 13) for focusing the laser radiation have a numerical aperture ≥ 0.65, preferably a numerical aperture ≥ 1.2.

5. Microtome according to one of the preceding claims,
**characterised in that** the pulsed application means are adapted to interrupt the beam, and/or divert it away from the position on the separation face, in a pulsed fashion.

6. Microtome according to one of the preceding claims,
**characterised in that** the pulsed application means cooperate with the radiation source in order interrupt the beam in a pulsed fashion.

7. Microtome according to one of the preceding claims,
**characterised in that** control means (14) are provided, which
- control the chronological sequence of the radiation pauses and/or are connected to means for recording of the chronological sequence of the radiation pauses and/or
- control the relative movement between the beam focus and the support as a function of the chronological sequence of the radiation pauses.

8. Microtome according to one of the preceding claims,
**characterised in that** control means are provided, which
- are connected to means for recording the relative movement between the beam focus and the support, and
- control the chronological sequence of the radiation pauses as a function of the relative movement.

9. Microtome according to one of the preceding claims,
**characterised in that** means are provided for controlling the relative movement between the support (3) and the beam focus (22) along a curved separation face (20).

10. Microtome according to one of the preceding claims,
**characterised in that** means (9, 8, 14, 15, 5, 16) are provided for observing the object to be processed.

11. Microtome according to Claim 10,
**characterised in that** the observation means comprise an optical microscope, which can be operated according to the reflected light and/or transmitted light method.

12. Microtome according to Claim 10 or 11,
**characterised in that** the observation means contain means (9, 14) for representing at least one segment of the object to be processed, with the aid of the back-scattered laser radiation.

13. Device according to Claim 12,
**characterised in that** the representation means comprise:
- a detector (9) for recording the radiation scattered back from the segment of the object to be processed,
- means (9) for recording coherent radiation reflected from a reference plane, and
- means (9; 14) for generating a pictorial representation of the segment of the object to be processed, by superimposing the laser radiation scattered back from the segment of the object to be processed and the coherent radiation reflected from the reference plane.

14. Method for microtoming objects (4) to be processed, having the steps
- holding at least one segment of the object to be processed, using a support (3) of a holding device,
- at least partially separating the object to be processed, by means of a cutting instrument,
- laser radiation (11) being output by a radiation source (10) assigned to the cutting instrument and
- this laser radiation being focused, and
**characterised in that** the beam focus is directed in a pulsed fashion with a pulse action time < 1*10⁻¹² second onto a position on a separation face region (19; 22) of an object to be processed, which lies parallel to the surface, in order to generate material separation at this position, the beam focus (22) being moved relative to the support (3) in two or three spatial directions so that the object to be processed is microtomed.

15. Method according to Claim 14,
**characterised in that** the beam focus is guided along a curved face (20).

16. Method according to Claim 14 or 15,
**characterised in that** the sequence of the pulses and the relative movement between the support and the beam focus are chronologically controlled in relation to one another.

17. Method according to one of Claims 14 to 16,
**characterised in that** the separation face is predetermined before the cutting process, and the beam focus is guided automatically along this separation face.

18. Method according to Claim 17,
**characterised in that** an image of at least one segment of the object to be processed is formed before the cutting process by means of a light microscopy imaging method, and the predetermination of the separation face is carried out with the aid of this image.

19. Method according to Claim 17,
**characterised in that** an image of at least one segment of the object to be processed is formed before the cutting process by means of the optical coherence tomography method, and the predetermination of the separation face is carried out with the aid of this image.

20. Method according to one of Claims 14 to 17,
**characterised in that** an image of at least one segment of the object to be processed is formed during the cutting process by means of a light microscopy imaging method and/or the optical coherence tomography method and the user is provided with a display of this image, with the aid of which they can then guide the beam focus.

21. Method according to one of Claims 14 to 20,
**characterised in that** one or more mutually isolated regions of the separation face are separated in a first phase of the cutting process, and full separation takes place along the separation face in a last phase of the cutting process by separating the regions lying between the isolated regions.

22. Use of a device, comprising:
- a holding device with a support (3) for holding at least one segment of an object (4) to be processed, and
- a separating instrument (6, 10, 13),
- at least one laser radiation source (10) and
- means (6; 13) for focusing the laser radiation, the beam focus (22) generated by the focusing being
- movable relative to the support (3), and
**characterised in that** the beam focus is directable onto a position on a separation face region (19; 20) of the object (4) to be processed, which lies parallel to the surface, in order to cause material separation at this position for microtoming an object (4) to be processed, and **in that** means (14) are provided for pulsed application of the beam focus at the position on the separation face, which means are adapted to generate pulses with an action time < 1*10⁻¹² second.

## Revendications

1. Microtome, comportant :
- un dispositif de réception comportant un support (3) pour recevoir au moins un segment d'un objet à usiner (4), et
- un dispositif de séparation (6, 10, 13),
- au moins une source de rayon laser (10) et
- des moyens pour focaliser (6 ; 13) le rayon laser,
dans lequel le point focal (22) généré par la focalisation
- peut être déplaçable par rapport au support (3), et
- peut être guidé sur un endroit des surfaces de séparation (19 ; 20) de l'objet à usiner (4), afin d'effectuer une séparation de matériau à cet endroit,
**caractérisé en ce que** des moyens pour irradier de façon pulsée (14) le point focal à l'endroit de la surface de séparation sont prévus, qui sont agencés pour générer des impulsions avec une durée d'exposition < 1*10⁻¹² secondes et **en ce que** le microtome est réalisé, afin de générer une zone de surface de séparation parallèle à la surface supérieure.

2. Microtome selon la revendication 1,
**caractérisé en ce que** les moyens pour concentrer (6 ; 13) le rayon laser sont agencés afin de déplacer le point focal dans au moins une direction spatiale par rapport au support.

3. Microtome selon la revendication 1 ou 2,
**caractérisé en ce que** des moyens pour guider (12) le rayon laser sont prévus, afin de déplacer le point focal dans au moins une direction spatiale par rapport au support.

4. Microtome selon l'une des revendications précédentes, **caractérisé en ce que** les moyens pour concentrer (6 ; 13) le rayon laser présentent une ouverture numérique ≥ 0,65, de préférence une ouverture numérique ≥ 1,2.

5. Microtome selon l'une des revendications précédentes, **caractérisé en ce que** les moyens pour une irradiation pulsée sont agencés, pour interrompre le rayon de manière pulsée et/ou déplacer depuis l'endroit de la surface de séparation.

6. Microtome selon l'une des revendications précédentes, **caractérisé en ce que** les moyens pour une irradiation pulsée coopèrent avec la source de rayons, afin d'interrompre le rayon de façon pulsée.

7. Microtome selon l'une des revendications précédentes, **caractérisé en ce que** des moyens de commande (14) sont prévus, qui
- commandent la succession temporelle des interruptions de rayon et/ou sont reliés aux moyens pour déterminer la succession temporelle des interruptions de rayon et/ou
- commandent le déplacement relatif entre le point focal et le support selon la succession temporelle des interruptions de rayon.

8. Microtome selon l'une des revendications précédentes, **caractérisé en ce que** des moyens de commande sont prévus, qui
- sont reliés aux moyens pour détecter le déplacement relatif entre le point focal et le support, et
- commandent la succession temporelle des interruptions de rayon selon le déplacement relatif.

9. Microtome selon l'une des revendications précédentes, **caractérisé en ce que** des moyens sont prévus pour commander le déplacement relatif entre le support (3) et le point focal (22) le long d'une surface de séparation courbée (20).

10. Microtome selon l'une des revendications précédentes, **caractérisé en ce que** des moyens pour observer (9, 8, 14, 15, 5, 16) l'objet à usiner sont prévus.

11. Microtome selon la revendication 10, **caractérisé en ce que** les moyens d'observation comprennent un microscope optique, qui peut fonctionner selon un procédé par éclairage incident ou en lumière transmise.

12. Microtome selon la revendication 10 ou 11,
**caractérisé en ce que** les moyens d'observation comprennent des moyens (9, 14) pour représenter au moins un segment de l'objet à usiner en regard du rayon laser rétro-réfléchi.

13. Microtome selon la revendication 12, **caractérisé en ce que** les moyens de représentation comprennent :
- un détecteur (9) pour détecter le rayon rétro-réfléchi du segment de l'objet à usiner,
- des moyens pour détecter (9) le rayon cohérent réfléchi par une surface de référence, et
- des moyens pour générer (9 ; 14) une représentation imagée du segment de l'objet à usiner grâce à la superposition du rayon réfléchi par le segment de l'objet à usiner et le rayon cohérent réfléchi par la surface de référence.

14. Procédé pour effectuer une microtomie des objets à usiner (4), comportant les étapes consistant à
- recevoir au moins un segment d'objet à usiner grâce à un support (3) d'un dispositif de réception,
- séparer au moins partiellement l'objet à usiner grâce à un dispositif de coupe,
dans lequel
- un rayon laser (11) est délivré par une source de rayons (10) associée au dispositif de coupe et
- ce rayon laser est concentré et **caractérisé en ce que** le point focal (22) est guidé de façon pulsée avec une durée d'exposition d'une impulsion < 1*10⁻¹² secondes sur un endroit d'une zone d'une surface de séparation (19 ; 22) parallèle à la surface supérieure d'un objet à usiner, afin de générer une séparation de matériau à cet endroit, où le point focal (22) est déplacé dans deux ou trois directions spatiales par rapport au support (3), de sorte que l'objet à usiner est microtomisé.

15. Procédé selon la revendication 14, **caractérisé en ce que** le point focal est guidé le long d'une surface courbée (20).

16. Procédé selon la revendication 14 ou 15,
**caractérisé en ce que** la succession d'impulsions et le déplacement relatif entre le support et le point focal sont commandés l'un par rapport à l'autre temporellement.

17. Procédé selon l'une des revendications 14 à 16, **caractérisé en ce que** la surface de séparation est prédéterminée par un processus de coupe et le point focal est guidé automatiquement le long de cette surface de séparation.

18. Procédé selon la revendication 17, **caractérisé en ce qu'**une reproduction d'au moins un segment de l'objet à usiner est réglée avant le processus de coupe grâce à un procédé de reproduction par microscope optique et la prédétermination de la surface de séparation est prévue en regard de cette reproduction.

19. Procédé selon la revendication 17, **caractérisé en ce qu'**une reproduction d'au moins un segment de l'objet à usiner est réglée avant le processus de coupe grâce au procédé de la tomographie cohérente optique et la prédétermination de la surface de séparation est prévue en regard de cet reproduction.

20. Procédé selon l'une des revendications 14 à 17, **caractérisé en ce que**, pendant le processus de coupe, une reproduction d'au moins un segment de l'objet à usiner au moyen d'un procédé de reproduction par microscope optique et/ou procédé de tomographie cohérente optique est réglée et une reproduction de cette représentation est à disposition de l'utilisateur, en regard de laquelle il peut guider le point focal.

21. Procédé selon l'une des revendications 14 à 20, **caractérisé en ce que**, dans une première phase du processus de coupe, une ou plusieurs zones de la surface de séparation écartées les unes des autres sont séparées et, dans une dernière phase du processus de coupe, une séparation totale est effectuée le long de la surface de séparation, où les zones se trouvant entre les zones écartées sont séparées.

22. Utilisation d'un dispositif, comportant
- un dispositif de réception comportant un support (3) pour recevoir au moins un segment d'un objet à usiner (4),
- un dispositif de séparation (6, 10, 13),
- au moins une source de rayon laser (10), et
- des moyens pour focaliser (6 ; 13) le rayon laser,
où le point focal (22) généré grâce à la focalisation
- peut être déplacé par rapport au support (3), et
**caractérisé en ce que** le point focal peut être guidé sur un endroit d'une zone d'une surface de séparation (19 ; 20) parallèle à la surface supérieure de l'objet à usiner (4), afin d'effectuer à cet endroit une séparation de matériau,
pour effectuer une microtomie un objet à usiner (4) et **en ce que** des moyens pour l'irradiation pulsée (14) du point focal à l'endroit de la surface de séparation sont prévus, qui sont agencés de manière à générer des impulsions avec une durée d'exposition < 1*10⁻¹².
